# EUROPEAN PATENT SPECIFICATION

(11) **EP 3 270 477 B1**
(45) Date of publication and mention of the grant of the patent: **13.10.2021**
(21) Application number: 15885594.0
(22) Date of filing: 10.12.2015
(51) Int. Cl.: H02B 1/16, H02B 1/32, H02B 1/20

(54) **ELECTRIC APPARATUS**
ELEKTRISCHE VORRICHTUNG
APPAREIL ÉLECTRIQUE

(30) Priority: 13.03.2015 JP 2015050221
(43) Date of publication of application: 17.01.2018
(73) Proprietor: Mitsubishi Electric Corporation, Chiyoda-ku Tokyo 100-8310 (JP)
(72) Inventor: SANGAWA Takayoshi, Tokyo 100-8310 (JP)
(74) Representative: Sajda, Wolf E.
(86) International application number: PCT/JP2015/084596
(87) International publication number: WO 2016/147502

(56) References cited:
- CN-U- 202 260 151
- JP-A- 2002 252 906
- JP-A- 2008 099 522
- JP-A- 2010 206 894
- JP-A- 2012 249 370
- JP-A- 2012 249 370
- JP-U- S52 126 226
- JP-U- S52 126 226
- None

## Description

### Technical Field

The present invention relates to an electrical equipment where, for example, a switchboard, called an electrical equipment main unit, is accommodated in a housing, particularly in the case where an electrical equipment, an electronic equipment or electric goods are accommodated in a metallic housing, in response to the possibility of electric shock when a person touches it, by connecting these equipment and facility to the ground via the housing, the difference between the potential and the ground is sufficiently reduced, and the arrangement of the ground bus connected with the ground intend to prevent electric shock.

### Background Art

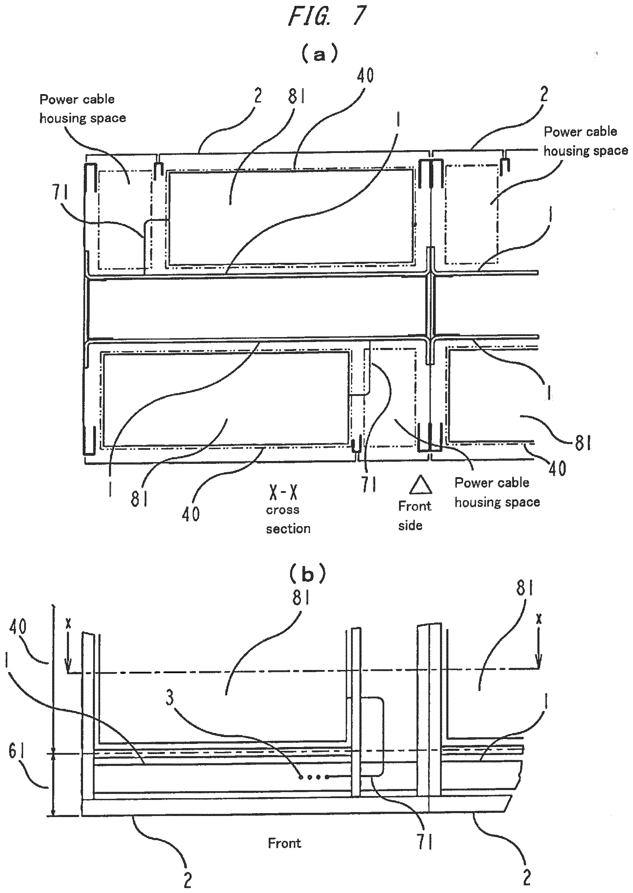

FIG. 7(a) and FIG. 7(b) are a plan view and a front view showing an example of a conventional switchboard having a structure wherein, as seen from the plan view, the ground bus 1 is disposed at a position far from the front side of the housing 2 and at a position far from the rear side together with, as seen from the front side, the lowermost space 61.

The arrangement of the ground bus 1 is considered to be able to connect the ground wire from the front side and the rear side. A ground wire mounting hole 3 is provided in the ground bus 1, by connecting the ground wire 71 of the electrical equipment main unit 81 to the ground wire mounting hole 3, the electrical equipment main unit 81 is grounded via the ground wire 71.

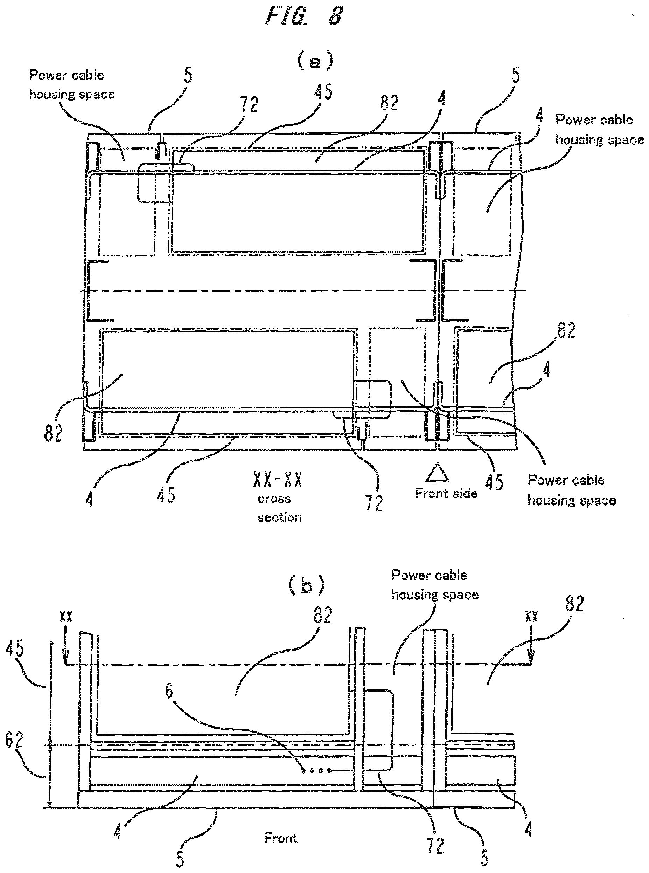

FIG. 8(a) and FIG. 8(b) are a plan view and a front view showing another example of the conventional switchboard having a structure wherein, as seen from the plan view, the ground bus 4 is disposed in the position of the forefront side and the position on the rearmost side of the housing 5 together with the lowermost space 62 as seen from the front side.

The arrangement of the ground bus 4 is considered to be able to connect the ground wire from the front side and the rear side. A ground wire mounting hole 6 is provided in the ground bus 4, and by connecting the ground wire 72 of the electrical equipment main unit 82 to the ground wire mounting hole 6, the electrical equipment main unit 82 is grounded via the grounding wire 72.

See Patent Document 1 as an example in which the ground bus is arranged at the position on the rearmost side of the housing.

Patent Literature 1 JP 2012-249370 A

### Disclosure of Invention

### Technical Problem

In a conventional switchboard shown in FIG. 7(a) and FIG. 7(b), as seen from the plan view, the ground bus 1 is arranged at a position far from the front side and at a position far from the rear side of the housing 2 together with the lowermost space 61, as seen from the front side, although consideration is made so that the ground wire connection work can be performed from the front side and the rear side, in order to connect the ground wire 71 to the ground wire mounting hole 3, a space for both hands of a person and a tool for attachment becomes necessary, and the lowermost space 61 must be secured to some extent in the vertical direction. Therefore, it is inevitable to reduce the electrical equipment main unit housing space 40 in the vertical direction.

In the conventional switchboard shown in FIG. 8(a) and FIG. 8(b), as seen from the plan view, the ground bus 4 is arranged at a position on the forefront side and the rearmost side of the housing 5, together with the lowermost space 62 as seen from the front side, since the ground wire mounting hole 6 becomes also the foremost side and the rearmost side, even when the lowermost space 62 is minimized in the vertical direction, it is possible to perform the ground wire connection work.

However, if the ground bus 4 is arranged at the position on the forefront side and the position on the rearmost side of the housing 5, since the ground bus 4 hinders the operation of connecting the external cable and the operation of connecting the foundation bolt, the ground bus 4 must be arranged as shown in FIG. 7, consequently, the problem in FIG. 7, is that the lowermost space 62 has to be raised in the vertical direction in order to secure the space where the ground wire connection work can be performed, as a result, in order to secure a space where the ground wire can be connected, it is inevitable to reduce the electrical equipment main unit housing space 45 in the vertical direction by a vertically raised extra space.

The present invention has been made in view of the above-described circumstances, and it is an object thereof to be able to dispose a ground bus without reducing the space for accommodating the electrical equipment main unit in the vertical direction.

### Solution to Problem

The present invention is defined by independent claims as appended. Advantageous further developments of the invention are set forth in the dependent claims.

### Advantageous Effects of Invention

According to the present invention, an electrical equipment is provided by an electrical equipment main unit housing space and an electric power cable housing space which are located on the right and left sides in a plan view in a housing, and, in the electrical equipment, an electrical equipment main unit is accommodated in the electrical equipment main unit housing space, a power cable connected to the electrical equipment main unit is accommodated in the power cable housing space, a ground bus for grounding the electrical equipment main unit is constructed by a left and right extended ground bus and a front and rear extended ground bus, and the left and right extended ground bus is located on a rear side position far from the electrical equipment main unit housing space in the housing and is disposed to be extended in a left and right direction as seen in a plan view, the front and rear extended ground bus is located on a side opposite to the electrical equipment main unit housing space of the power cable housing space, is disposed to be extended in a front and rear direction as seen in a plan view, is connected to the left and right extended ground bus, and has a ground wire attachment part, and further according to the present invention, the electrical equipment having two pairs of electrical equipment main unit housing space and power cable housing spaces located on anteroposterior position as seen in a plan view in a housing, and, in the electrical equipment, an electrical equipment main unit is located in each of the electrical equipment main unit housing space, power cables connected to the electrical equipment main unit are located in each of the power cable housing spaces, a ground bus for grounding each of the electrical equipment main unit is constructed by a left and right extended ground bus, a first front and rear extended ground bus, and a second front and rear extended ground bus, further the left and right extended ground bus is located between the electrical equipment main unit housing space and the power cable housing space on the front side as seen in the plan view, and the electrical equipment main unit housing space and the power cable housing space on the rear side as seen in the plan view, the left and right extended ground bus is disposed to be extended left and right as seen in the plan view and disposed inside the housing, the first front and rear extended ground bus is positioned on the opposite side to the electrical equipment main unit housing space of the front side of the power cable housing space of the front side, is disposed to be extended in a front and rear direction as seen in a plan view, is connected to the left and right extended ground bus, and has a ground wire attachment part, and the second front and rear extended ground bus is positioned on the opposite side to the electrical equipment main unit housing space of the rear side of the power cable housing space of the rear side, is disposed to be extended in a front and rear direction as seen in a plan view, is connected to the left and right extended ground bus, and has another ground wire attachment part.

Thereby, it is possible to dispose the ground bus and to easily connect the ground wire to the ground bus without reducing the housing space of the electrical equipment main unit housing space in the vertical direction, in addition, without affecting the space in the vertical direction of the upper part, the lower part, and the upper part and the lower part of the electrical equipment main unit housing space in the housing.

### Brief Description of the Drawings

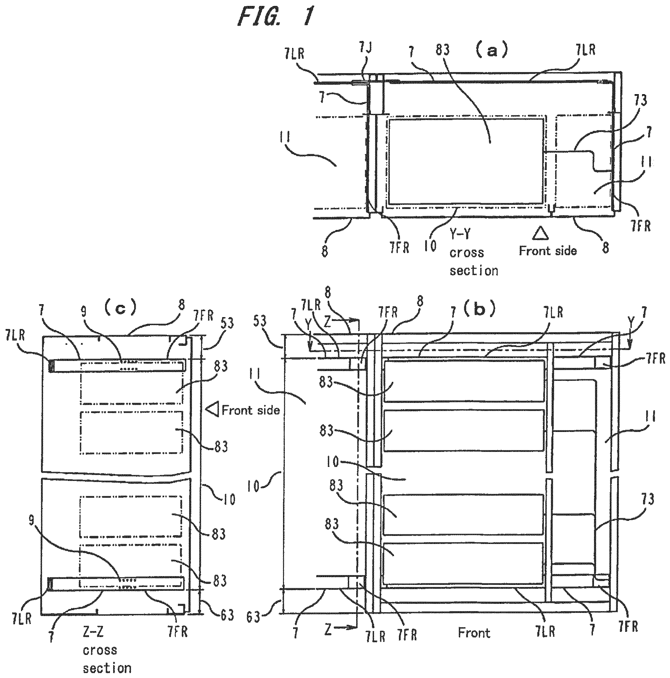

FIG. 1 is a view showing a first embodiment of the present invention, and showing an example of the case where a ground bus of a board type electrical equipment is arranged at the rear part of the uppermost space or the lowermost space of the housing, the ground bus is extended to the front side of the power cable housing space on the right side in the housing, and a ground wire attachment hole is provided in the ground bus extended to the front side thereof, FIG. 1(a) is a cross sectional plan view of the Y-Y cross section in FIG. 1(b) as seen in the arrow direction, FIG. 1(b) is a front view, and FIG. 1(c) is a longitudinal sectional side view of the Z-Z section in FIG. 1(b) as seen in the arrow direction.

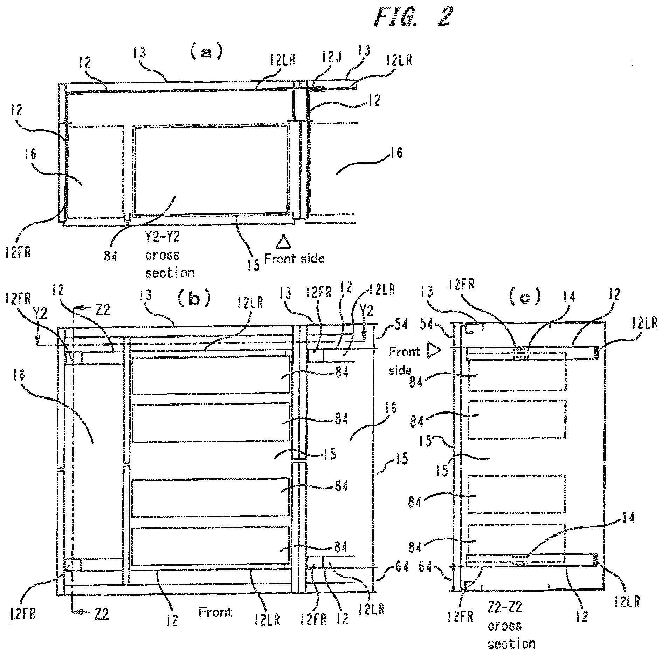

FIG. 2 is a view showing a first embodiment of the present invention, and showing an example of the case where a ground bus of a board type electrical equipment is arranged at the rear part of the uppermost space or the lowermost space of the housing, the ground bus is extended to the front side of the power cable housing space on the left side in the housing, and a ground wire attachment hole is provided in the ground bus extended to the front side thereof, FIG. 2(a) is a cross-sectional plan view of the Y2-Y2 cross section in FIG. 2(b) as seen in the arrow direction, FIG. 2(b) is a front view, and FIG. 2(c) is a longitudinal cross-sectional side view taken along the Z2-Z2 cross section in FIG. 2(b) in the arrow direction.

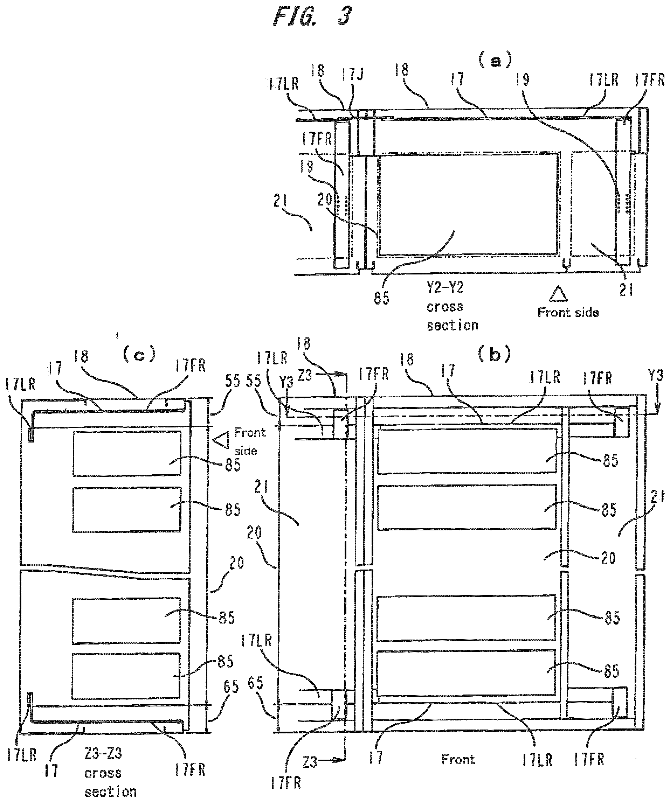

FIG. 3 is a view showing a second embodiment of the present invention, and showing an example of the case where a ground bus of a board type electrical equipment is arranged at the rear part of the uppermost space or the lowermost space of the housing, along the upper or lower frame in the housing, the ground bus is extended to the front side of the power cable housing space on the right side in the housing, and a ground wire attachment hole is provided in the ground bus extended to the front side thereof, FIG. 3(a) is a cross-sectional plan view of the Y3-Y3 cross section in FIG. 3(b) as seen in the arrow direction, FIG. 3(b) is a front view, and FIG. 3(c) is a vertical cross-sectional side view taken along the Z3-Z3 cross section in FIG. 3(b) in the arrow direction.

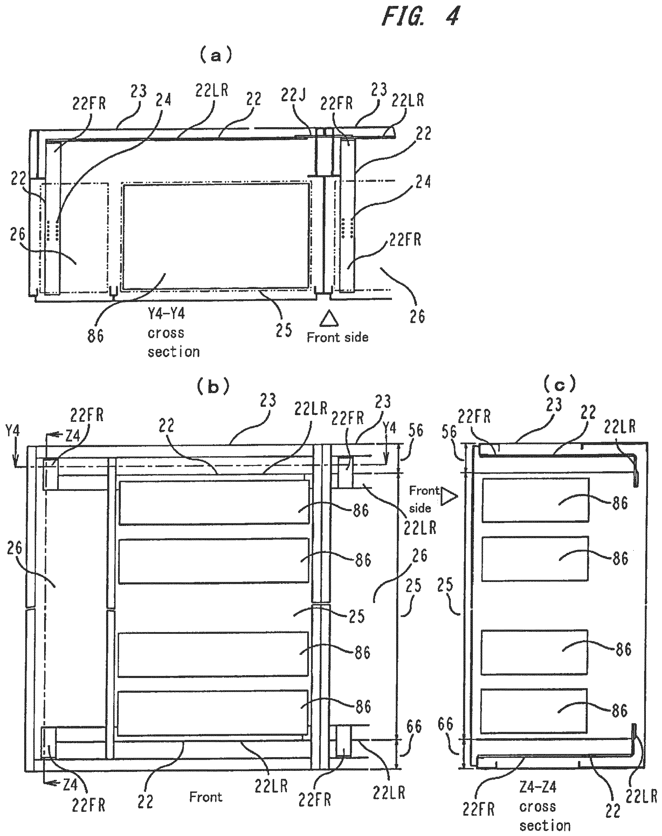

FIG. 4 is a view showing a second embodiment of the present invention, and showing an example of the case where a ground bus of a board type electrical equipment is arranged at the rear part of the uppermost space or the lowermost space of the housing, along the upper frame when the ground bus is arranged at the top, and the lower frame when the ground bus is arranged at the bottom, a ground bus is extended to the front side of the power cable housing space on the left side in the housing, and a ground wire attachment hole is provided in the ground bus extended to the front side thereof, FIG. 4(a) is a cross sectional plan view of the Y4-Y4 section in FIG. 4(b) as seen in the arrow direction, FIG. 4(b) is a front view, and FIG. 4(c) is a longitudinal cross-sectional side view taken along the Z4-Z4 cross section in FIG. 4(b) in the arrow direction.

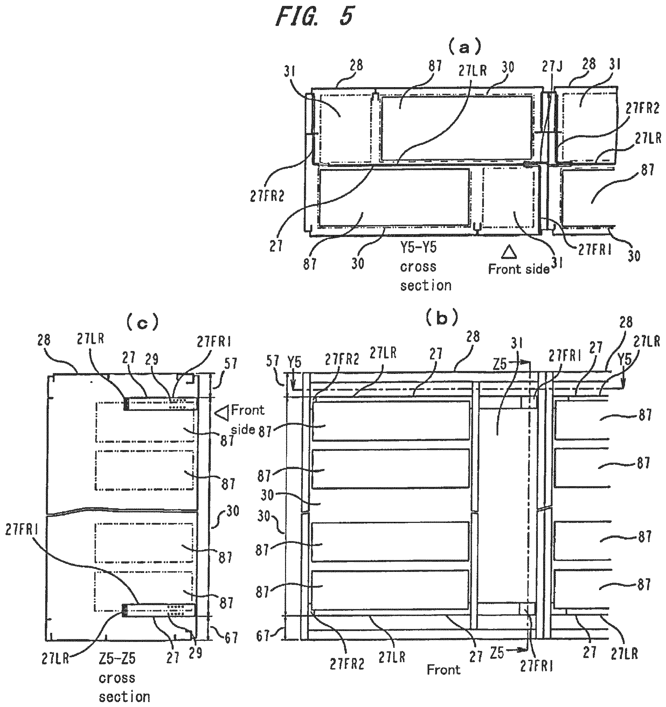

FIG. 5 is a view showing a third embodiment of the present invention, and showing an example of the case where a ground bus of the board type electrical equipment is arranged at the uppermost space or the lowermost space of the center of the housing, the ground bus is extended from the ground bus arranged at the center along the left and right frames on the inner surface of the housing and in the front-rear direction of the housing, FIG. 5(a) is a cross sectional plan view of the cross section taken along line Y5-Y5 in FIG. 5(b) as seen in the arrow direction, FIG. 5(b) is a front view, and FIG. 5(c) is a longitudinal cross-sectional side view taken along the Z5-Z5 cross section in FIG. 5(b) in the arrow direction.

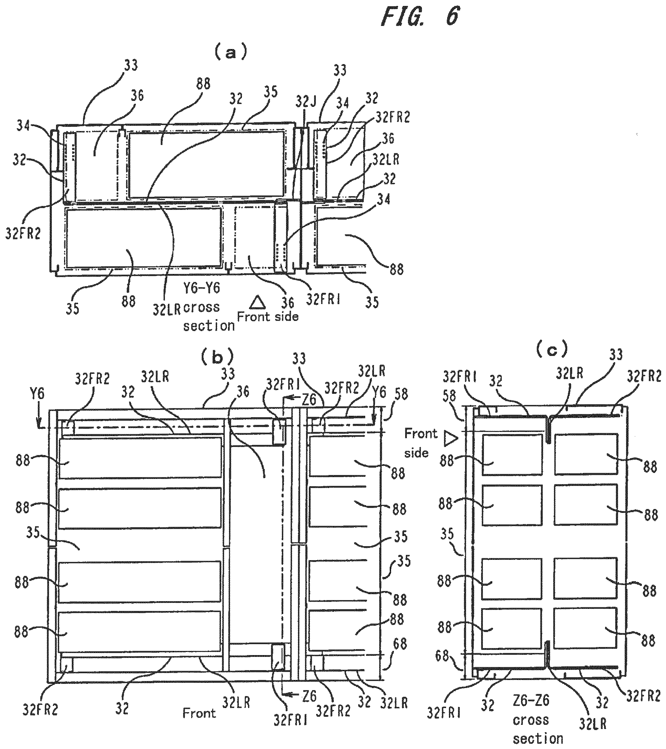

FIG. 6 is a view showing a third embodiment of the present invention, and showing an example of the case where a ground bus of the board type electrical equipment is arranged at the uppermost space or the lowermost space of the center of the housing, along the upper frame when in the uppermost space housing, and in the lower frame when in the lowermost space housing, the ground bus is extended in the front and back direction of the housing, FIG. 6(a) is a cross-sectional plan view of the cross section taken along line Y6-Y6 in FIG. 6(b) as viewed in the direction of the arrow, FIG. 6(b) is a front view, and FIG. 6(c) is a longitudinal cross-sectional side view taken along the Z6-Z6 cross section in FIG. 6(b) in the arrow direction.
FIG. 7 is a view showing an example in the case where the ground bus of the conventional switchboard is disposed at the bottom on the front side of the board and at the bottom on the rear side of the board, FIG. 7(a) is a cross-sectional plan view of the X-X cross section in FIG. 7(b) as seen in the arrow direction, and FIG. 7(b) is a front view.
FIG. 8 is a view showing an example in the case where a ground bus of a conventional switchboard is disposed on the forefront side and the rearmost side of the lowermost space of the board, FIG. 8(a) is a cross sectional plan view of the XX-XX cross section in FIG. 8(b) as viewed in the arrow direction, and FIG. 8(b) is a front view.

### Description of Embodiments

### First Embodiment

Hereinafter, a first embodiment of the present invention will be described with reference to FIG. 1 and FIG. 2. FIG. 1 shows an example in the case where a ground bus of a board-type electrical equipment is disposed in either the uppermost space or the lowermost space of the rear part of the electric equipment main unit housing space in the housing, the ground bus is extended to the front side of the power cable housing space on the right side in the housing, and a ground wire attachment hole is provided in a ground bus extended to the front side thereof, FIG. 1(a) is a cross sectional plan view of the Y-Y section in FIG. 1(b) as seen in the arrow direction, FIG. 1(b) is a front view, and FIG. 1(c) is a longitudinal sectional side view of the Z-Z section in FIG. 1(b) as seen in the arrow direction.

FIG. 2 shows an example in the case where the ground bus of the board-type electrical equipment is arranged in the housing at the uppermost space or the lowermost space of the rear part of the electrical equipment main unit housing space, a ground bus is extended to the front side of the power cable housing space on the left side in the housing, and a ground wire attachment hole is provided in a ground bus extended to the front side thereof, FIG. 2(a) is a cross-sectional plan view of the Y2-Y2 cross section in FIG. 2(b) as seen in the arrow direction, FIG. 2(b) is a front view, and FIG. 2(c) is a longitudinal cross-sectional side view taken along the Z2-Z2 cross section in FIG. 2(b) in the arrow direction.

In the first embodiment, for example, an electrical equipment such as an enclosed switchboard, a control panel, a cubicle, as well as switchgear, as illustrated in FIG. 1, an electrical equipment main unit housing space 10 and a power cable housing space 11 which are located on the right and left sides as seen in plan view are provided inside the housing 8, an electrical equipment unit 83 (for example, a unit of a device such as a wiring circuit breaker or an electromagnetic switch) is housed in the electrical equipment main unit housing space 10, in an electrical equipment, a power cable (for example, an external power supply lead-in cable, a power supply cable for load, etc.) connected to the electrical equipment main unit 83 is housed in the power cable housing space 11, a ground bus 7 for grounding the electrical equipment main unit 83 is located behind the electrical equipment main unit housing space 10 and the power cable housing space 11, the ground bus 7, 7 of each of the electrical equipment arranged in rows, is connected by connecting the left and right extended ground bus 7LR, 7LR of the adjacent electrical equipment with the conductive connecting plate 7J.

The structure is a right and left extending ground bus 7LR extending in the left and right as seen in a plan view and disposed in the housing 8, located on the opposite side to the electrical equipment housing space of the power cable housing space 11, extended forward and backward and disposed inside the housing 8 together with a front and rear extended ground bus 7LR extending in the housing 8 and connected to the left and right extended ground bus 7FR and having a ground wire attachment part 9 such as a ground wire attachment hole.

As shown in the figures, the front-rear extended ground bus 7FR and the left-right extended ground bus 7LR, as viewed from the front side, are provided by an upper side and/or a lower side, and are disposed at the same height as seen from the front side.

To explain with a different point of view, the ground bus 7 is disposed at the rear of the housing 8, according to the ground bus 7 arranged at the rear part thereof, and is connected to the ground bus 7 of the electrical equipment next to the row board configuration.

Then, according to the ground bus 7 arranged at the rear part of the electrical equipment main unit housing space 10 and the power cable housing space 11, along with a frame of the housing 8 (for example, an internal reinforcing frame of the housing 8, an electrical equipment unit housing frame, an exterior panel housing frame, etc. is attached to the inside of the exterior panel of the housing 8) extends to the front side of the power cable housing space 11 provided on the right side of the housing 8, and a ground wire attachment part 9 such as a ground wire attachment hole is provided on the extended ground bus 7.

By providing the ground wire attachment part 9 in the power cable housing space 11, a space for accommodating the uppermost space 53 (for example, a space for accommodating a board-to-board crossover cable, a terminal block, a power supply lead-in cable) or a lowermost space 63 (for example, a space for housing cables between boards, a terminal block), without having an adverse effect of increasing the extra space for the ground wire connection operation as in the past, a ground wire 73 is connected to the ground bus 7 via the ground wire attachment part 9, the ground wire connection operation to be connected to the electrical equipment main unit 83 incorporated in the housing 8, wherein the power cable housing space 11 having a space margin, since it can be done easily, the height in the vertical direction of the electrical equipment main unit housing space 10, has not the necessary to reduce the amount of excessive raising space for the ground wire connection operation as in the past, and it is possible to increase the housing efficiency, obtains a space-saving and an economic efficiency of the electrical equipment unit which is the electrical equipment main unit 83.

Further, a ground wire 73 is connected to the ground bus 7 via the ground wire attachment part 9, the grounding wire connection operation to be connected to the electrical equipment main unit 83 incorporated in the housing 8 is performed before installing the power cable in the power cable housing space 11 or after assembling the power cable in the power cable housing space 11.

FIG. 2 is an example of the structure in the case where the power cable housing space 16 is provided on the left side of the housing 13.

The ground bus 12 is disposed at either the uppermost space or the lowermost space of the rear part of the housing 13, by the ground bus 12 arranged at the rear part thereof, and connected to the ground bus of the electrical equipment next to the row board configuration, the ground bus 12 disposed at the rear of the electric equipment main unit housing space 15 and the power cable housing space 16 is made to follow the frame of the housing 13, and the power cable housing part disposed on the left side of the housing 13 and extends to the front side of the space 16, and a ground wire attachment part 14 such as a ground wire attachment hole is provided on the extended ground bus 12.

By providing the ground wire attachment part 14 in the power cable housing space 16, without affecting the uppermost space 54 or the lowermost space 64, it is possible to easily perform the operation of connecting the ground wire within the power cable housing space 11 having a margin in the space.

Since the ground wire connection operation can be performed without affecting the uppermost space 54 or the lowermost space 64 in this manner, compared to the past, in order to secure the space where the ground wire connecting work can be performed in the uppermost space 54 or the lowermost space 64, it is unnecessary to reduce the height of the electrical equipment main unit housing space 15 as a result of extra raising in the vertical direction, and it is possible to improve the housing efficiency of the electrical equipment main unit housing space 84, save space, and improve the economic efficiency.

Further, As shown in the figures, the housings 8, 8 constituting the row board are mechanically connected to each other, and the left and right extended ground bus 7LR, 7LR of the housings 8, 8 are electrically connected to each other by the conductive connection plate 7J, the laterally extended ground bus 12LR and 12LR of the respective housings 13 and 13 are also electrically connected to each other by a conductive connecting plate 12J, the ground wire connecting operation for connecting the ground wire 73 to the ground bus 7 via the grounding wire attachment part 9 to the electric equipment main unit 83 incorporated in the housing 8, this is done for each of the housings 8, 8 is performed for each of the housing, these are the same in the second and third embodiments to be described later.

### Second Embodiment

Hereinafter, a second embodiment will be described with reference to FIG. 3 and FIG. 4.

FIG. 3 is showing an example of a case where the ground bus of the board-type electrical equipment is disposed in the housing at either the uppermost space or the lowermost space of the rear part of the electrical equipment main unit housing space, in the case of the uppermost disposition, along the upper frame, in the case of the lowermost space disposition it is arranged along the lower frame, the ground bus is extended to the front side of the power cable housing space on the right side in the housing, and a ground wire attachment hole is provided in a ground bus extended to the front side thereof, FIG. 3(a) is a cross-sectional plan view of the Y3-Y3 cross section in FIG. 3(b) as seen in the arrow direction, FIG. 3(b) is a front view, and FIG. 3(c) is a longitudinal cross-sectional side view taken along the Z3-Z3 cross section in FIG. 3(b) in the arrow direction.

FIG. 4 is showing an example of a case where the ground bus of the board-type electrical equipment is arranged in either the uppermost space or the lowermost space of the rear part of the electrical equipment main unit housing space in the housing, in the case of the uppermost housing, along the upper frame, is arranged along the lower frame in the case of the lowermost space, the ground bus is extended to the front side of the power cable housing space on the left side in the housing, and a ground wire attachment hole is provided in a ground bus extended to the front side thereof, FIG. 3(a) is a cross-sectional plan view of the Y4-Y4 section in FIG. 3(b) as seen in the arrow direction, FIG. 3(b) is a front view, And FIG. 3(c) is a longitudinal sectional side view of the section taken along the line Z4-Z4 in FIG. 3(b) as seen in the arrow direction.

In the second embodiment, for example, electrical equipment such as enclosed switchboards, control boards, cubicles, switch gears, as illustrated in FIG. 3, an electrical equipment main unit housing space 20 and a power cable housing space 21 which are positioned on the right and left sides as seen in plan view are provided inside the housing 18, an electrical equipment main unit 85 (for example, a unit of a device such as a wiring breaker, an electromagnetic switch) is housed in the electrical equipment main unit housing space 20, a power cable (for example, an external power supply lead-in cable, a power supply cable for load, etc.) connected to the electrical equipment main unit 85 is accommodated in the power cable housing space 21, a ground bus 17 for grounding the electrical equipment main unit 85 is located behind the electrical equipment main unit housing space 20 and the power cable housing space 21, a horizontally extending ground bus 17LR extending in the left and right as seen in plan view and disposed inside the housing 18, and is located on the side opposite to the electrical equipment main unit housing space 20 of the power cable housing space 21 and extends in the front-rear direction, and a front and rear extended ground bus 17FR disposed inside the housing 18 and connected to the left and right extended ground bus 17LR and which has a ground wire attachment part 19 such as a ground wire attachment hole.

As shown in the figures, the front and rear extended ground bus 17FR and the left and right extended ground bus 17LR are disposed at different heights as viewed from the front side.

As shown in the figures, the front and rear extended ground bus 17FR and the left and right extended ground bus 17LR are provided on either the upper side or the lower side as seen from the front side, in addition, as shown in the figures, in the front and rear extended ground bus 17FR and the left and right extended ground bus 17LR, in the case of the upper arrangement, the front and rear extended ground bus 17FR is positioned above the upper left and right extended ground bus 17LR when viewed from the front side, as shown in the figures, in the case of the lower side arrangement, the front and rear extended ground bus 17FR are positioned below the left and right extended ground bus 17LR as seen from the front side.

To explain with a different point of view, in the first embodiment, the ground bus is extended from the rear part of the housing to the left and right front side, although a ground wire attachment hole is provided at the extension destination thereof, in the present embodiment, the ground bus is extended to either one of the upper side and the lower side of the housing, and ground wire attachment part such as a ground wire attachment hole is provided.

As shown in FIG. 3, the ground bus 17 is disposed at the rear of the housing 18, and is connected to the ground bus of the electrical equipment next to the row board configuration by the ground bus 17 arranged at the rear part.

Then, the ground bus 17 disposed at the rear of the electrical equipment main unit housing space 20 and the power cable housing space 21 is made to follow the frame of either the upper part or the lower part of the housing 18, extends to the front side of the power cable housing space 21 provided on the right side of the housing 18, and a ground wire attachment part 19 such as a ground wire attachment hole is provided on the extended ground bus 17.

By providing the ground wire attachment part 19 in the power cable housing space 21, without affecting the uppermost space 55 or the lowermost space 65, since it is possible to easily perform the grounding wire connecting operation within the power cable housing space 21 having a space margin, it is unnecessary to reduce the height of the electrical equipment main unit housing space 20, and it is possible to improve the housing efficiency of the electrical equipment main unit 85, save space, and improve the economic efficiency.

FIG. 4 is an example of a structure in the case where the power cable housing space 26 is provided on the left side of the housing 23.

The ground bus 22 is disposed at the rear of the housing 23,and connected to the ground bus of the electrical equipment next to the row board configuration by the ground bus 22 arranged at the rear part.

Then, the ground bus 22 arranged at the rear of the electrical equipment main unit housing space 25 and the power cable housing space 26 is made to follow the frame of either the upper part or the lower part of the housing 23, extends to the front side of the power cable housing space 26 provided on the left side of the housing 23, and a grounding wire attachment part 24 such as a ground wire attachment hole is provided on the extended ground bus 22.

By disposing the ground wire attachment part 24 in the power cable housing space 26, without affecting the uppermost space 56 or the lowermost space 66, since it is possible to easily perform the grounding wire connecting operation within the power cable housing space 26 having a space margin, it is necessary to reduce the height of the electrical equipment main unit housing space 25 as a result of excessively raising the uppermost space 56 or the lowermost space 66 in the vertical direction in order to secure a space for performing the ground wire connection operation, compared to the past, it is possible to improve the housing efficiency of the electrical equipment main unit 86, save space, and improve the economic efficiency.

### Third Embodiment

Hereinafter, a third embodiment of the present invention will be described with reference to FIG. 5 and FIG. 6.

FIG. 5 is a view showing an example of a case where a ground bus of a board type electrical equipment is disposed at either the uppermost space or the lowermost space at the center of the housing, the ground bus is extended from the ground bus arranged at the center along the left and right frames on the inner surface of the housing and in the front-rear direction of the housing, FIG. 5(a) is a cross sectional plan view of the cross section taken along line Y5-Y5 in FIG. 5(b) as seen in the arrow direction, FIG. 5(b) is a front view, and FIG. 5(c) is a longitudinal cross-sectional side view taken along the Z5-Z5 cross section in FIG. 5(b) in the arrow direction.

FIG. 6 is a view showing an example of a case where the ground bus of the board-type electrical equipment is disposed at either the uppermost space or the lowermost space at the center of the housing, in the case of the uppermost disposition, is made to be along the upper frame, in the case of the disposition of the lowermost space, is made to follow the lower frame, the ground bus is extended in the front-rear direction of the housing, FIG. 6(a) is a cross-sectional plan view of the cross section taken along line Y6-Y6 in FIG. 6(b) as seen in the arrow direction, FIG. 6(b) is a front view, FIG. 6(c) is a longitudinal cross-sectional side view taken along the Z6-Z6 cross section in FIG. 6(b) in the arrow direction.

In the second embodiment, for example, an electrical equipment such as a closed switchboard, a control panel, a cubicle, or a switchgear, as illustrated in FIG. 5, inside the housing 28, is provided by two pairs of electrical equipment main unit housing space 30 and power cable housing spaces 31 located on the right and left sides as seen in plan view, and having a structure wherein, the electrical equipment main unit is located in the electrical equipment main unit housing space 30, the electrical equipment in which the power cables connected to the electrical equipment main unit are located in each of the power cable housing spaces 31, the ground bus 27 for grounding each of the electrical equipment main unit 87 is located between the electrical equipment main unit housing space 30 and the power cable housing space 31 on the front side as seen in the plan view, and the electrical equipment main unit housing space 31 and the power cable housing space 30 on the rear side as seen in the plan view, as seen in the plan view, extended left and right, a left and right extended ground bus 27LR disposed inside the housing 28 is positioned on the opposite side to the front side of the electrical equipment main unit housing space 30 of the front side of the power cable housing space 31, is disposed inside the housing 28, front side extended, together with the first front and rear extended ground bus 27FR1 connected to the left and right extended ground bus 27LR and having a ground wire attachment part 29, located on the opposite side of the rear side of the electrical equipment main unit housing space 30 of the rear side of the power cable housing space 31, extended in the front and rear side, and disposed inside the housing 28 together with a second front and rear extended ground bus 27FR2 connected to the left and right extended ground bus 27LR and having a ground wire attachment part 29.

As shown in the figures, the left and right extended ground bus 27LR, the first front and rear extended ground bus 27FR1 and the second front and rear extended ground bus 27FR2 are disposed at the same height as seen from the front side.

As shown in the figures, the left and right extended ground bus 27LR, the first front and rear extended ground bus 27FR1, and the second front and rear extended ground bus 27FR2 are arranged at either the uppermost space or the lowermost space as seen from the front side.

To explain with a different point of view, in the present embodiment, the ground bus 27 is arranged in the center of the housing 28.

As shown in FIG. 5, the ground bus 27 arranged at the center of the housing 28 connects to the ground bus of the electrical equipment next to the column structure.

Then, the ground bus 27 arranged at the center of the housing 28 is extended along the left and right frames of the front or rear housing 28 of the housing 28 and extended to the power cable housing space 31.
Further, a ground wire attachment part 29 such as a ground wire attachment hole is provided on the extended ground bus 27.

By providing the ground wire attachment part 29 in the power cable housing space 31, without affecting the uppermost space 57 or the lowermost space 67, in the power cable housing space 31 with a margin of space, since it can be done easily, compared to the past, it is unnecessary to reduce the height of the electrical equipment main unit housing space 30 as a result of excessively raising the uppermost space 57 or the lowermost space 67 in the vertical direction in order to secure the space for performing the ground wire connection operation, and it is possible to increase the housing efficiency, space-saving and economic efficiency of the electrical equipment main unit 87.

FIG. 6 shows a structure in which the ground bus 32 is disposed at the center of the housing 33 and the ground bus 32 is extended on the top and bottom of the housing 33.

As in FIG. 5, the ground bus 32 is arranged at either the uppermost space or the lowermost space at the center of the housing 33, and the ground bus 32 arranged at the center thereof connects to the ground bus of the electrical equipment next to the column structure.

Then, the ground bus 32 arranged at the center is extended along the frame above or below the housing 33 on the front side or the rear side of the housing 33 and extended to the power cable housing space 36.
Further, the ground wire attachment part 34 is provided on the extended ground bus 32.

By disposing the ground wire attachment part 34 in the power cable housing space 36, without affecting the uppermost space 58 or the lowermost space 68, since it is possible to easily perform the ground wire attachment operation within the power cable housing space 36 having a space margin in the space, compared to the past, it is unnecessary to reduce the height of the electrical equipment main unit housing space 35 as a result of excessively raising the uppermost space 58 or the lowermost space 68 in the vertical direction in order to secure the space for performing the ground wire connection operation, ant it is possible to improve the housing efficiency of the electrical equipment main unit 88, save space, and improve the economic efficiency.

In the present invention, each embodiment can be appropriately combined, modified, or features omitted therein within the scope of the invention.

In the figures, the same reference numerals indicate the same or corresponding parts.

### List of Reference Signs

- 1, 4, 7, 12, 17, 22, 27, 32: Ground bus
- 7LR, 12LR, 17LR: Left and right extended ground bus
- 22LR, 27LR, 32LR: Left and right extended ground bus
- 7FR, 12FR, 17FR, 22FR: Front and rear extended ground bus
- 7J, 12J, 17J: Conductive connection plate
- 22J, 27J, 32J: Conductive connection plate
- 27FR1, 32FR1: First front and rear extended ground bus Second front and rear extended ground bus

- 2, 5, 8, 13: Housing
- 18, 23, 28, 33: Housing
- 3, 6, 9, 14, 19: Ground wire attachment part
- 24, 29, 34: Ground wire attachment part
- 40, 45: Electric equipment main unit housing space
- 11, 16, 21, 26, 31, 36: Power cable housing space
- 53, 54, 55, 56, 57, 58: Uppermost space
- 61, 62, 63, 64: Lowermost space
- 65, 66, 67, 68: Lowermost space
- 71, 72, 73: Ground wire
- 81, 82, 83, 84: Electrical equipment main unit
- 85, 86, 87, 88: Electrical equipment main unit

## Claims

1. An electrical equipment comprising an electrical equipment main unit housing space (10, 15, 20, 25) and an electric power cable housing space (11, 16, 21, 26) which are located on the right and left sides to each other in a housing (8, 13, 18, 23), wherein;
- an electrical equipment main unit (83, 84, 85, 86) is accommodated in the electrical equipment main unit housing space (10, 15, 20, 25),
- a power cable connected to the electrical equipment main unit is accommodated in the power cable housing space (11, 16, 21, 26),
- a ground bus (7, 12, 17, 22) for grounding the electrical equipment main unit (83, 84, 85, 86) is comprised by a left and right extended ground bus (7LR, 12LR, 17LR, 22LR) and a front and rear extended ground bus (7FR,12FR, 17FR, 22FR),
- wherein, the left and right extended ground bus (7LR, 12LR, 17LR, 22LR) is located inside the housing (8, 13, 18, 23) and extends in a left to right direction relative to the housing (8, 13, 18, 23) and is positioned at the rear of the housing (8, 13, 18, 23),
- wherein, the front and rear extended ground bus (7FR, 12FR, 17FR, 22FR) extends in a front to rear direction relative to the housing (8, 13, 18, 23), is positioned in the power cable housing space (11, 16, 21, 26) on the side opposite to the side adjacent the electrical equipment main unit housing space (10, 15, 20, 25), is connected to the left and right extended ground bus (7LR, 12LR, 17LR, 22LR), and has a ground wire attachment part (9, 14, 19, 24) for attachment to the electrical equipment main unit (83, 84, 85, 86).

2. The electrical equipment according to claim 1,
wherein the front and rear extended ground bus (7FR, 12FR, 17FR, 22FR) and the left and right extended ground bus (7LR, 12LR, 17LR, 22LR) are provided on at least one of an upper side and a lower side of the interior of the housing (8, 13, 18, 23) as seen from the front side.

3. The electrical equipment according to claim 1 or 2,
wherein the front and rear extended ground bus (7FR, 12FR) and the left and right extended ground bus (7LR, 12LR) are arranged at the same height as seen from the front side.

4. The electrical equipment according to claim 1 or 2,
wherein the front and rear extended ground bus (17FR, 22FR) and the left and right extending ground bus (17LR, 22LR) are arranged at different heights as seen from the front side.

5. The electrical equipment according to claim 2,
wherein among a pair of the front and rear extended ground bus (17FR, 22FR) and the left and right extended ground bus (17LR, 22LR), the front and rear extended ground bus (17FR, 22FR) on an upper side, as seen from the front side, is positioned above the left and right extended ground bus (17LR, 22LR) on an upper side, the lower front and rear extended ground bus (17FR, 22FR) on a lower side, as seen from the front side, is positioned below the left and right extended ground bus (17LR, 22LR) on a lower side.

6. The electrical equipment according to any one of claims 1 to 5,
wherein in the case of a row board configuration in which a plurality of the electrical equipment is installed adjacently on the left and right in a plan view, the ground bus (7, 12, 17, 22) of each of the electrical equipment are connected to each other.

7. An electrical equipment comprising a first pair of a first electrical equipment main unit housing space (30, 35) and a first power cable housing space (31, 36), and a second pair of a second electrical equipment main unit housing space (30, 35) and a second power cable housing space (31, 36), the first pair and the second pair being located on anteroposterior position in a housing (28, 33), in each pair the electrical equipment main unit housing space (30, 35) and the power cable housing space (31, 36) being located on the right and left sides to each other, wherein:
- an electrical equipment main unit (87, 88) is located in each of the first and second electrical equipment main unit housing spaces (30, 35), and power cables connected to the electrical equipment main unit (87, 88) are located in each of the first and second power cable housing spaces (31, 36),
- a ground bus (27, 32) for grounding each of the electrical equipment main unit (87, 88) is comprised by a left and right extended ground bus (27LR, 32LR), a first front and rear extended ground bus (27FR1, 32FR1), and a second front and rear extended ground bus (27FR2, 32FR2),
- wherein, the left and right extended ground bus (27LR, 32LR) extends in a left to right direction relative to the housing (28, 33) and is positioned between the first pair on the front side of the housing (28, 33) and the second pair on the rear side of the housing (28, 33),
- wherein the left and right extended ground bus (27LR, 32LR) is disposed inside the housing (28, 33),
- wherein, the first front and rear extended ground bus (27FR1, 32FR1) extends in a front to rear direction relative to the housing (28, 33), is positioned in the first power cable housing space (31, 36), on the opposite side to the side adjacent the first electrical equipment main unit housing space (30, 35), is connected to the left and right extended ground bus (27LR, 32LR), and has a ground wire attachment part (29, 34) for attachment to the respective electrical equipment main unit (87, 88),
- wherein, the second front and rear extended ground bus (27FR2, 32FR2) extends in a front to rear direction relative to the housing (28, 33), is positioned in the second power cable housing space (31, 36) on the opposite side to the side adjacent the second electrical equipment main unit housing space (30, 35), is connected to the left and right extended ground bus (27LR, 32LR), and has another ground wire attachment part (29, 34) for attachment to the respective electrical equipment main unit (87, 88).

8. The electrical equipment according to claim 7,
wherein the left and right extended ground bus (27LR, 32LR), the first front and rear extended ground bus (27FR1, 32FR1), and the second front and rear extended ground bus (27FR2, 32FR2) are provided on at least one of an upper side and a lower side of the inside of the housing (28, 33) as seen from the front side.

9. The electrical equipment according to claim 7 or 8,
wherein the left and right extended ground bus (27LR, 32LR), the first front and rear extended ground bus (27FR1, 32FR1), and the second front and rear extended ground bus (27FR2, 32FR2) are disposed at the same height as seen from the front side.

10. The electrical equipment according to claim 7 or 8,
wherein the first front and rear extended ground bus (27FR1, 32FR1) and the left and right extended ground bus (27LR, 32LR) are arranged at different heights as seen from the front side, and the second front and rear extended ground bus (27FR2, 32FR2) and the left and right extended ground bus (27LR, 32LR) are disposed at different heights as seen from the front side.

11. The electrical equipment according to claim 8,
wherein in a pair of the first front and rear extended ground bus (27FR1, 32FR1), the second front and rear extended ground bus (27FR2, 32FR2), and the left and right extended ground bus (27LR, 32LR), the first front and rear extended ground bus (27FR1, 32FR1) on an upper side and the second front and rear extended ground bus (27FR2, 32FR2) on an upper side, as seen from the front side, are positioned above the left and right extending ground bus (27LR, 32LR) on an upper side, and the first front and rear extended ground bus (27FR1, 32FR1) on a lower side and the second front and rear extended ground bus (27FR2, 32FR2) on a lower side are positioned below the left and right extended ground bus (27LR, 32LR) on a lower side.

12. The electrical equipment according to any one of claims 7 to 11,
wherein in the case of a row board configuration in which a plurality of the electrical equipment is installed adjacently on the left and right in a plan view, the ground buses (27, 32) of the respective electrical equipment are connected to each other.

## Patentansprüche

1. Elektrogerät, das einen Gehäuseraum (10, 15, 20, 25) für eine Elektrogerät-Haupteinheit und einen Gehäuseraum (11, 16, 21, 26) für ein elektrisches Netzkabel aufweist, die rechts und links nebeneinander in einem Gehäuse (8, 13, 18, 23) angeordnet sind,
wobei
- eine Elektrogerät-Haupteinheit (83, 84, 85, 86) in dem Gehäuseraum (10, 15, 20, 25) für eine Elektrogerät-Haupteinheit untergebracht ist,
- ein Netzkabel, das mit der Elektrogerät-Haupteinheit verbunden ist, und in dem Gehäuseraum (11, 16, 21, 26) für ein Netzkabel untergebracht ist,
- eine Erdungsschiene (7, 12, 17, 22) für die Erdung der Elektrogerät-Haupteinheit (83, 84, 85, 86), die eine links und rechts verlängerte Erdungsschiene (7LR, 12LR, 17LR, 22LR) und eine vorn und hinten verlängerte Erdungsschiene (7FR, 12FR, 17FR, 22FR) aufweist,
- wobei die links und rechts verlängerte Erdungsschiene (7LR, 12LR, 17LR, 22LR) innerhalb des Gehäuses (8, 13, 18, 23) angeordnet ist, und sich in einer Richtung von links nach rechts relativ zu dem Gehäuse (8, 13, 18, 23) erstreckt, und an der Rückseite des Gehäuses (8, 13, 18, 23) angeordnet ist,
- wobei sich die vorn und hinten verlängerte Erdungsschiene (7FR, 12FR, 17FR, 22FR) in einer Richtung von vorn nach hinten relativ zum Gehäuse (8, 13, 18, 23) erstreckt, und in dem Gehäuseraum (11, 16, 21, 26) für ein Netzkabel auf der Seite angeordnet ist, die der Seite gegenüberliegt, die an den Gehäuseraum (10, 15, 20, 25) für eine Elektrogerät-Haupteinheit angrenzt, und mit der links und rechts verlängerten Erdungsschiene (7LR, 12LR, 17LR, 22LR) verbunden ist, und ein Erdungsleiter-Befestigungsteil (9, 14, 19, 24) zur Befestigung an der Elektrogerät-Haupteinheit (83, 84, 85, 86) aufweist.

2. Elektrogerät nach Anspruch 1,
wobei die vorn und hinten verlängerte Erdungsschiene (7FR, 12FR, 17FR, 22FR) und die links und rechts verlängerte Erdungsschiene (7LR, 12LR, 17LR, 22LR), von der Vorderseite aus gesehen, an mindestens einer von einer Oberseite und einer Unterseite des Inneren des Gehäuses (8, 13, 18, 23) angeordnet sind.

3. Elektrogerät nach Anspruch 1 oder 2,
wobei die vorn und hinten verlängerte Erdungsschiene (7FR, 12FR) und die links und rechts verlängerte Erdungsschiene (7LR, 12LR), von der Vorderseite aus gesehen, auf der gleichen Höhe angeordnet sind.

4. Elektrogerät nach Anspruch 1 oder 2,
wobei die vorn und hinten verlängerte Erdungsschiene (17FR, 22FR) und die links und rechts verlängerte Erdungsschiene (17LR, 22LR), von der Vorderseite aus gesehen, auf unterschiedlichen Höhen angeordnet sind.

5. Elektrogerät nach Anspruch 2,
wobei von einem Paar von der vorn und hinten verlängerten Erdungsschiene (17FR, 22FR) und der links und rechts verlängerten Erdungsschiene (17LR, 22LR), die vorn und hinten verlängerte Erdungsschiene (17FR, 22FR), von der Vorderseite aus gesehen, auf einer Oberseite oberhalb der links und rechts verlängerten Erdungsschiene (17LR, 22LR) angeordnet ist, und die vorn und hinten verlängerte Erdungsschiene (17FR, 22FR) auf einer Unterseite, von der Vorderseite aus gesehen, unterhalb der links und rechts verlängerten Erdungsschiene (17LR, 22LR) auf einer Unterseite angeordnet ist.

6. Elektrogerät nach einem der Ansprüche 1 bis 5,
wobei bei einer Reihenboard-Konfiguration, bei der eine Vielzahl von Elektrogeräten in der Draufsicht links und rechts nebeneinander angeordnet ist, die Erdungsschienen (7, 12, 17, 22) der jeweiligen Elektrogeräte miteinander verbunden sind.

7. Elektrogerät, das ein erstes Paar von einem ersten Gehäuseraum (30, 35) für eine Elektrogerät-Haupteinheit und einem ersten Gehäuseraum (31, 36) für ein Netzkabel und ein zweites Paar aus einem zweiten Gehäuseraum (30, 35) für eine Elektrogerät-Haupteinheit und einem zweiten Gehäuseraum (31, 36) für ein Netzkabel aufweist,
wobei das erste Paar und das zweite Paar an anteroposterioren Positionen in einem Gehäuse (28, 33) angeordnet sind, wobei in jedem Paar der Gehäuseraum (30, 35) für eine Elektrogerät-Haupteinheit und der Gehäuseraums (31, 36) für ein Netzkabel rechts und links voneinander angeordnet sind, wobei:
- eine Elektrogerät-Haupteinheit (87, 88) in jedem der ersten und zweiten Gehäuseräume (30, 35) für eine Elektrogerät-Haupteinheit angeordnet ist, und Netzkabel, die mit der Elektrogerät-Haupteinheit (87, 88) verbunden sind, in jedem der ersten und zweiten Gehäuseräume (31, 36) für ein Netzkabel angeordnet sind;
- eine Erdungsschiene (27, 32) zur Erdung der jeweiligen Elektrogerät-Haupteinheiten (87, 88), die eine links und rechts verlängerte Erdungsschiene (27LR, 32LR), eine erste vorn und hinten verlängerte Erdungsschiene (27FR1, 32FR1) und eine zweite vorn und hinten verlängerte Erdungsschiene (27FR2, 32FR2) aufweist,
- wobei sich die links und rechts verlängerte Erdungsschiene (27LR, 32LR) in einer Richtung von links nach rechts relativ zum Gehäuse (28, 33) erstreckt und zwischen dem ersten Paar auf der Vorderseite des Gehäuses (28, 33) und dem zweiten Paar auf der Rückseite des Gehäuses (28, 33) angeordnet ist,
- wobei die links und rechts verlängerte Erdungsschiene (27LR, 32LR) innerhalb des Gehäuses (28, 33) angeordnet ist,
- wobei sich die erste vorn und hinten verlängerte Erdungsschiene (27FR1, 32FR1) in einer Richtung von vorn nach hinten relativ zum Gehäuse (28, 33) erstreckt, und in dem ersten Gehäuseräume (31, 36) für ein Netzkabel auf der Seite positioniert ist, die der Seite neben dem ersten Gehäuseraum (30, 35) für eine Elektrogerät-Haupteinheit gegenüberliegt, und mit der links und rechts verlängerten Erdungsschiene (27LR, 32LR) verbunden ist, und ein Erdungsleiter-Befestigungsteil (29, 34) zur Befestigung an der jeweiligen Elektrogerät-Haupteinheit (87, 88) aufweist,
- wobei sich die zweite vorn und hinten verlängerte Erdungsschiene (27FR2, 32FR2) in einer Richtung von vorn nach hinten relativ zu dem Gehäuse (28, 33) erstreckt, und in dem zweiten Gehäuseraum (31, 36) für ein Netzkabel auf der Seite positioniert ist, die der Seite benachbart zu dem zweiten Gehäuseraum (30, 35) für eine Elektrogerät-Haupteinheit gegenüberliegt, und mit der links und rechts verlängerten Erdungsschiene (27LR, 32LR) verbunden ist, und ein weiteres Erdungsleiter-Befestigungsteil (29, 34) zur Befestigung an der jeweiligen Elektrogerät-Haupteinheit (87, 88) aufweist.

8. Elektrogerät nach Anspruch 7,
wobei die links und rechts verlängerte Erdungsschiene (27LR, 32LR), die erste vorn und hinten verlängerte Erdungsschiene (27FR1, 32FR1) und die zweite vorn und hinten verlängerte Erdungsschiene (27FR2, 32FR2) auf mindestens einer von einer oberen Seite und einer unteren Seite des Inneren des Gehäuses (28, 33), von der Vorderseite aus gesehen, angeordnet sind.

9. Elektrogerät nach Anspruch 7 oder 8,
wobei die links und rechts verlängerte Erdungsschiene (27LR, 32LR), die erste vorn und hinten verlängerte Erdungsschiene (27FR1, 32FR1) und die zweite vorn und hinten verlängerte Erdungsschiene (27FR2, 32FR2), von der Vorderseite aus gesehen, auf der gleichen Höhe angeordnet sind.

10. Elektrogerät nach Anspruch 7 oder 8,
wobei die erste vorn und hinten verlängerte Erdungsschiene (27FR1, 32FR1) und die links und rechts verlängerte Erdungsschiene (27LR, 32LR), von der Vorderseite aus gesehen, auf unterschiedlichen Höhen angeordnet sind, und die zweite vorn und hinten verlängerte Erdungsschiene (27FR2, 32FR2) und die links und rechts verlängerte Erdungsschiene (27LR, 32LR), von der Vorderseite aus gesehen, auf unterschiedlichen Höhen angeordnet sind.

11. Elektrogerät nach Anspruch 8,
wobei in einem Paar von der ersten vorn und hinten verlängerten Erdungsschiene (27FR1, 32FR1) und der zweiten vorn und hinten verlängerten Erdungsschiene (27FR2, 32FR2) sowie der links und rechts verlängerten Erdungsschiene (27LR, 32LR), die erste vorn und hinten verlängerte Erdungsschiene (27FR1, 32FR1) auf einer Oberseite und die zweite vorn und hinten verlängerte Erdungsschiene (27FR2, 32FR2) auf einer Oberseite, von der Vorderseite aus gesehen, oberhalb der links und rechts verlängerten Erdungsschiene (27LR, 32LR) angeordnet sind, und die erste vorn und hinten verlängerte Erdungsschiene (27FR1, 32FR1) auf einer Unterseite und die zweite vorn und hinten verlängerte Erdungsschiene (27FR2, 32FR2) auf einer Unterseite unterhalb der links und rechts verlängerten Erdungsschiene (27LR, 32LR) auf einer Unterseite angeordnet sind.

12. Elektrogerät nach einem der Ansprüche 7 bis 11,
wobei bei einer Reihenboard-Konfiguration, bei der eine Vielzahl von Elektrogeräten in der Draufsicht links und rechts nebeneinander angeordnet ist, die Erdungsschienen (27, 32) der jeweiligen Elektrogeräte miteinander verbunden sind.

## Revendications

1. Équipement électrique comprenant un compartiment de boîtier d'unité principale d'équipement électrique (10, 15, 20, 25) et un compartiment de boîtier de câble de puissance électrique (11, 16, 21, 26) qui sont situés sur les côtés de droite et de gauche l'un par rapport à l'autre dans un boîtier (8, 13, 18, 23), dans lequel ;
- une unité principale d'équipement électrique (83, 84, 85, 86) est logée dans le compartiment de boîtier d'unité principale d'équipement électrique (10, 15, 20, 25),
- un bus de terre (7, 12, 17, 22) destiné à mettre à la terre l'unité principale d'équipement électrique (83, 84, 85, 86) comprend un bus de terre étendu vers la gauche et vers la droite (7LR, 12LR, 17LR, 22LR) et un bus de terre étendu vers l'avant et vers l'arrière (7FR, 12FR, 17FR, 22FR),
- dans lequel le bus de terre étendu vers la gauche et vers la droite (7LR, 12LR, 17LR, 22LR) est situé à l'intérieur du boîtier (8, 13, 18, 23) et s'étend dans une direction gauche/droite relativement au boîtier (8, 13, 18, 23) et est positionné à l'arrière du boîtier (8, 13, 18, 23),
- dans lequel le bus de terre étendu vers l'avant et vers l'arrière (7FR, 12FR, 17FR, 22FR) s'étend dans une direction avant/arrière relativement au boîtier (8, 13, 18, 23), est positionné dans le compartiment de boîtier de câble de puissance (11, 16, 21, 26) sur le côté opposé au côté adjacent du compartiment de boîtier d'unité principale d'équipement électrique (10, 15, 20, 25), est connecté au bus de terre étendu vers la gauche et vers la droite (7LR, 12LR, 17LR, 22LR), et a une partie de fixation de fil de terre (9, 14, 19, 24) pour une fixation à l'unité principale d'équipement électrique (83, 84, 85, 86).

2. Équipement électrique selon la revendication 1,
dans lequel le bus de terre étendu vers l'avant et vers l'arrière (7FR, 12FR, 17FR, 22FR) et le bus de terre étendu vers la gauche et vers la droite (7LR, 12LR, 17LR, 22LR) sont prévus sur au moins un côté parmi un côté supérieur et un côté inférieur de l'intérieur du boîtier (8, 13, 18, 23), tels que vus depuis le côté avant.

3. Équipement électrique selon la revendication 1 ou 2,
dans lequel le bus de terre étendu vers l'avant et vers l'arrière (7FR, 12FR) et le bus de terre étendu vers la gauche et vers la droite (7LR, 12LR) sont agencés à la même hauteur, tels que vus depuis le côté avant.

4. Équipement électrique selon la revendication 1 ou 2,
dans lequel le bus de terre étendu vers l'avant et vers l'arrière (17FR, 22FR) et le bus de terre étendu vers la gauche et vers la droite (17LR, 22LR) sont agencés à des hauteurs différentes, tels que vus depuis le côté avant.

5. Équipement électrique selon la revendication 2,
dans lequel, parmi une paire constituée du bus de terre étendu vers l'avant et vers l'arrière (17FR, 22FR) et du bus de terre étendu vers la gauche et vers la droite (17LR, 22LR), le bus de terre étendu vers l'avant et vers l'arrière (17FR, 22FR) sur un côté supérieur, tel que vu depuis le côté avant, est positionné au-dessus du bus de terre étendu vers la gauche et vers la droite (17LR, 22LR) sur un côté supérieur, le bus de terre étendu vers l'avant et vers l'arrière (17FR, 22FR) sur un côté inférieur, tel que vu depuis le côté avant, est positionné en dessous du bus de terre étendu vers la gauche et vers la droite (17LR, 22LR) sur un côté inférieur.

6. Équipement électrique selon l'une quelconque des revendications 1 à 5, dans lequel, dans le cas d'une configuration de panneau en rangée dans laquelle une pluralité d'équipements électriques sont installés de manière adjacente sur la gauche et la droite dans une vue en plan, les bus de terre (7, 12, 17, 22) de chacun des équipements électriques sont connectés les uns aux autres.

7. Équipement électrique comprenant une première paire constituée d'un premier compartiment de boîtier d'unité principale d'équipement électrique (30, 35) et d'un premier compartiment de boîtier de câble de puissance (31, 36), et une seconde paire constituée d'un second compartiment de boîtier d'unité principale d'équipement électrique (30, 35) et d'un second compartiment de boîtier de câble de puissance (31, 36), la première paire et la seconde paire étant situées sur une position antéropostérieure dans un boîtier (28, 33), dans chaque paire le
compartiment d'espace d'unité principale d'équipement électrique (30, 35) et le compartiment de boîtier de câble de puissance (31, 36) étant situés sur les côtés de droite et de gauche l'un par rapport à l'autre, dans lequel :
- une unité principale d'équipement électrique (87, 88) est située dans chaque compartiment parmi le premier et le second compartiment de boîtier d'unité principale d'équipement électrique (30, 35), et des câbles de puissance connectés à l'unité principale d'équipement électrique (87, 88) sont situés dans chaque compartiment parmi le premier et le second compartiment de boîtier de câble de puissance (31, 36),
- un bus de terre (27, 32) destiné à mettre à la terre chacune des unités principales d'équipement électrique (87, 88) comprend un bus de terre étendu vers la gauche et vers la droite (27LR, 32LR), un premier bus de terre étendu vers l'avant et vers l'arrière (27FR1, 32FR1), et un second bus de terre étendu vers l'avant et vers l'arrière (27FR2, 32FR2),
- dans lequel le bus de terre étendu vers la gauche et vers la droite (27LR, 32LR) s'étend dans une direction gauche/droite relativement au boîtier (28, 33) et est positionné entre la première paire sur le côté avant du boîtier (28, 33) et la seconde paire sur le côté arrière du boîtier (28, 33),
- dans lequel le bus de terre étendu vers la gauche et la droite (27LR, 32LR) est disposé à l'intérieur du boîtier (28, 33),
dans lequel le premier bus de terre étendu vers l'avant et vers l'arrière (27FR1, 32FR1) s'étend dans une direction avant/arrière relativement au boîtier (28, 33), est positionné dans le premier compartiment de boîtier de câble de puissance (31, 36) sur le côté opposé au côté adjacent au premier compartiment de boîtier d'unité principale d'équipement électrique (30, 35), est connecté au bus de terre étendu vers la gauche vers la droite (27LR, 32LR), et a une partie de fixation de fil de terre (29, 34) pour une fixation à l'unité principale d'équipement électrique respective (87, 88),
- dans lequel le second bus de terre étendu vers l'avant et vers l'arrière (27FR2, 32FR2) s'étend dans une direction avant/arrière relativement au boîtier (28, 33), est positionné dans le second compartiment de boîtier de câble de puissance (31, 36) sur le côté opposé au côté adjacent au second compartiment de boîtier d'unité principale d'équipement électrique (30, 35), est connecté au bus de terre étendu vers la gauche et vers la droite (27LR, 32LR), et a une autre partie de fixation de fil de terre (29, 34) pour une fixation à l'unité principale d'équipement électrique respective (87, 88).

8. Équipement électrique selon la revendication 7,
dans lequel le bus de terre étendu vers la gauche et vers la droite (27LR, 32LR), le premier bus de terre étendu vers l'avant et vers l'arrière (27FR1, 32FR1), et le second bus de terre étendu vers l'avant et vers l'arrière (27FR2, 32FR2) sont prévus sur au moins un côté parmi un côté supérieur et un côté inférieur à l'intérieur du boîtier (28, 33), tels que vus depuis le côté avant.

9. Équipement électrique selon la revendication 7 ou 8,
dans lequel le bus de terre étendu vers la gauche et vers la droite (27LR, 32LR), le premier bus de terre étendu vers l'avant et vers l'arrière (27FR1, 32FR1), et le second bus de terre étendu vers l'avant et vers l'arrière (27FR2, 32FR2) sont disposés à la même hauteur, tels que vus depuis le côté avant.

10. Équipement électrique selon la revendication 7 ou 8,
dans lequel le premier bus de terre étendu vers l'avant et vers l'arrière (27FR1, 32FR1) et le bus de terre étendu vers la gauche à la droite (27LR, 32LR) sont agencés à des hauteurs différentes, tels que vus depuis le côté avant, et le second bus de terre étendu vers l'avant et vers l'arrière (27FR2, 32FR2) et le bus de terre étendu vers la gauche et vers la droite (27LR, 32LR) sont disposés à des hauteurs différentes, tels que vus depuis le côté avant.

11. Équipement électrique selon la revendication 8,
dans lequel, dans une paire constituée du premier bus de terre étendu vers l'avant et vers l'arrière (27FR1, 32FR1) et du second bus de terre étendu vers l'avant et vers l'arrière (27FR2, 32FR2), le premier bus de terre étendu vers l'avant et vers l'arrière (27FR1, 32FR1) sur un côté supérieur et le second bus de terre étendu vers l'avant et vers l'arrière (27FR2, 32FR2) sur un côté supérieur, tels que vus depuis le côté avant, sont positionnés au-dessus du bus de terre s'étendant vers la gauche et vers la droite (27LR, 32LR) sur un côté supérieur, et le premier bus de terre étendu vers l'avant et vers l'arrière (27FR1, 32FR1) sur un côté inférieur et le second bus de terre étendu vers l'avant et vers l'arrière (27FR2, 32FR2) sur un côté inférieur sont positionnés en dessous du bus de terre étendu vers la gauche et vers la droite (27LR, 32LR) sur un côté inférieur.

12. Équipement électrique selon l'une quelconque des revendications 7 à 11, dans lequel, dans le cas d'une configuration de panneau en rangée dans laquelle une pluralité d'équipements électriques sont installés de manière adjacente sur la gauche et la droite dans une vue en plan, les bus de terre (27, 32) de l'équipement électrique respectif sont connectés les uns aux autres.
